# EUROPEAN PATENT SPECIFICATION

(11) **EP 3 715 020 B1**
(45) Date of publication and mention of the grant of the patent: **28.02.2024**
(21) Application number: 19212308.1
(22) Date of filing: 28.11.2019
(51) Int. Cl.: B22F 3/105, B29C 64/153, B29C 64/245, B29C 64/40, B33Y 10/00, B33Y 30/00, B22F 12/30, B22F 10/20, B22F 10/40, B22F 12/67, B22F 12/20, B22F 12/17, B22F 10/28, B22F 10/66, B22F 10/62, B22F 10/25

(54) **INSERTS IN A BUILD PLATE UTILIZED IN ADDITIVE MANUFACTURING**
EINSÄTZE IN EINER BAUPLATTE ZUR VERWENDUNG BEI DER GENERATIVEN FERTIGUNG
INSERTS DANS UNE PLAQUE DE CONSTRUCTION UTILISÉE DANS UNE FABRICATION ADDITIVE

(30) Priority: 27.03.2019 US 201916366846
(43) Date of publication of application: 30.09.2020
(60) Divisional application: 22184762.7
(73) Proprietor: Hamilton Sundstrand Corporation, Charlotte, NC 28217-4578 (US)
(72) Inventor: MADINGER, Alexander, Chesterfield, MO 63017 (US); BOSWORTH, Alexander, Simsbury, CT 06070 (US)
(74) Representative: Dehns

(56) References cited:
- DE-A1-102013 214 485
- DE-A1-102016 204 462
- US-A1- 2018 086 004
- US-A1- 2018 117 854

## Description

### BACKGROUND

The present disclosure relates to an additive manufacturing system having inserts in a build plate.

Additive manufacturing, such as powder bed fusion or direct energy deposition, requires layer by layer construction of a manufactured component to be built upon a platform/build plate. After the component has been formed, the build plate and finished component are removed from the additive manufacturing machine and separated from one another by electrical discharge machining or other means. The build plate is then ground down to be flat/smooth to be used in the next additive manufacturing process to provide a surface upon which another component can be formed. However, the steps of separating the component and build plate and grinding down the build plate are time consuming and costly as the additive manufacturing machine cannot be operated when the build plate is not in place. US 2018/086004 A1 discloses a method of additively manufacturing a component. US 2018/117854 A1 discloses an additive manufacturing system according to the preamble of claim 1.

### SUMMARY

[deleted]

An additive manufacturing system according to claim 1 is provided.

### BRIEF DESCRIPTION OF THE DRAWINGS

FIG. 1A is perspective view of an additive manufacturing system.
FIG. 1B is a cross-sectional view of a build plate with inserts present in a indentation of the build plate.
FIG. 1C is a cross-sectional view of the build plate with a component and support structures formed upon inserts.
FIG. 1D is a cross-sectional view of the build plate and inserts after the inserts, component, and support structures have been removed from the indentation in the build plate.
FIG. 2 is a flow chart of the additive manufacturing process utilizing inserts.

### DETAILED DESCRIPTION

One way of reducing the down time of an additive manufacturing machine is to build a component on an insert that fits within a corresponding indentation in the build plate. Once the component is complete, the component and the insert are removed (and separated from one another), another insert is placed within the indentation, and the additive manufacturing process begins again with minimal downtime. Often times, the component may require an overhang that is supported by a support structure, which can be formed during the additive manufacturing process (i.e., layer by layer) from the same material as the component. The support structure can later be separated from the finished component. This support structure is welded/melted to the build plate (or possibly the insert if an insert is used). Unfortunately, the support structure also needs to be separated from the insert or build plate, increasing the post-processing time and cost of the component.

A system according in accordance with the invention of claim 1 is provided. A method is also disclosed herein. The system includes a build plate with one or multiple indentations to accommodate multiple inserts upon which the manufactured component and one or multiple support structures can be formed. The inserts are shaped such that the component is built/formed upon a primary insert and the support structure (or multiple support structures) is built upon a different insert. When the additive manufacturing process is complete, the inserts are removed from the build plate. The inserts are then separated from each other, thus separating the support structure from the finished component. The support structures can be noncontact support structures such that the support structures can be separated from the finished component without the need for cutting or further machining. Different inserts are then utilized in the build plate, which can be new inserts or previously used inserts that have been separated from the component and/or support structures. With the support structures able to be the noncontact type with the component, the support structures may be broken off from the component by hand during post-processing, decreasing the time and machining needed to prepare the finished component.

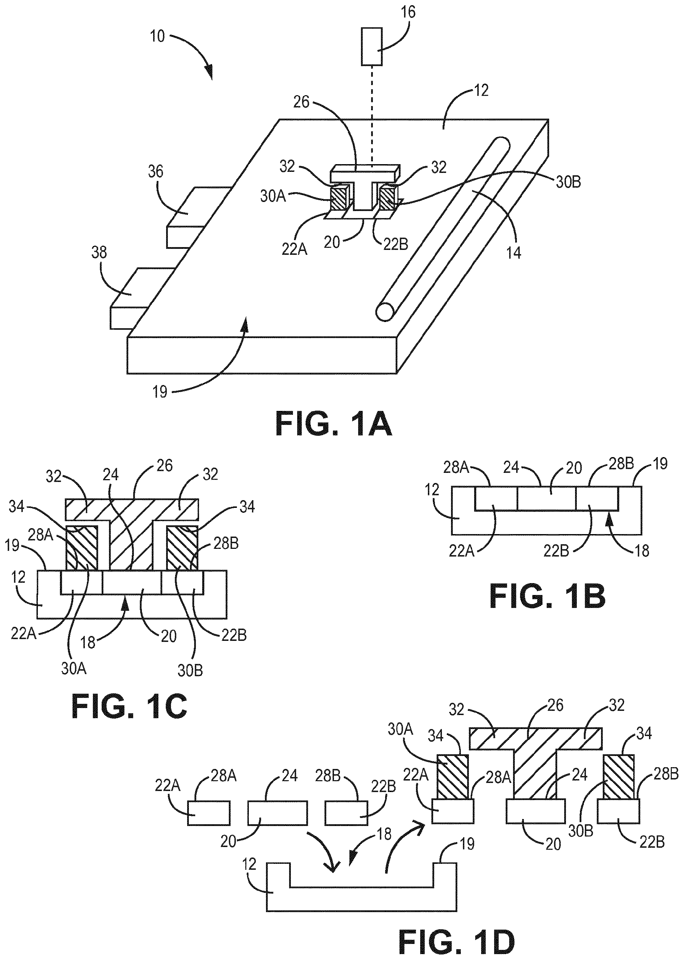

FIG. 1A is perspective view of an additive manufacturing system that utilizes a build plate with at least one indentation to accommodate multiple inserts, FIG. 1B is a cross-sectional view of a build plate with the inserts in place in the indentation of the build plate, FIG. 1C is a cross-sectional view of the build plate with a component and support structures formed upon the inserts, and FIG. 1D is a cross-sectional view of the build plate and inserts after the inserts, component, and support structures have been removed from the indentation in the build plate.

Additive manufacturing system 10 includes build plate 12, depositor 14, and energy source 16. Build plate 12 includes at least one indentation 18 extending into top surface 19. Additive manufacturing system 10 also includes primary insert 20 and multiple support inserts 22A and 22B configured to be placed within at least one indentation 18. Primary insert 20 includes primary build surface 24 upon which component 26 is formed, and support inserts 22A and 22B each include support build surfaces 28A and 28B, respectively, upon which support structures 30A and 30B are formed. Component 26 can include one or multiple overhangs 32. Support surfaces 34 are between overhangs 32 and corresponding support structures 30A and 30B. Additive manufacturing system 10 also includes another energy source 36 configured to provide energy to heat build plate 12 and cooling source 38 configured to cool primary insert 20 and support inserts 22A and 22B.

Additive manufacturing system 10 is a system generally known in the art for forming component 26 (and other components) and can be, for example, a laser powder bed fusion system or direct energy deposition system that builds/forms component 26 and support structures 30A and 30B layer by layer by liquifying (i.e., changing the state of) a material used to form component 26. The liquified material is then cooled (i.e., the state of the material is changed back to a solid) to form a bond with a previously formed layer on a bottom side or, if the current layer being formed is the first layer of component 26 or support structures 30A and 30B, on primary insert 20 or support inserts 22A and 22B. While component 26 is shown as a simple T-shaped component, the disclosed additive manufacturing system 10 with primary insert 20, support inserts 22A and 22B, and support structures 30A and 30A can be configured to form other, complex shapes of component 26. For example, more than two support inserts of differing shapes with support structures of differing shapes can be used to provide sufficient support to more than two overhangs having complex shapes. The present disclosure does not limit additive manufacturing system 10 to forming component 26 that is T-shaped with only two overhangs 32. While not expressly disclosed, additive manufacturing system 10 can include other features.

Additive manufacturing system 10 includes depositor 14, which is configured to provide material to form component 26 and/or support structures 30A and 30B. Depositor 14 is generally known in the art and can have a variety of configurations suitable to provide the material. For example, if system 10 is a direct energy deposition additive manufacturing system, depositor 14 can be within a head that may also include energy source 16. Alternatively, if system 10 is a laser powder bed fusion additive manufacturing system, depositor 14 can be a roller (as shown in FIG. 1A) to deposit material. The material can be a powder, liquid, or solid depending on the additive manufacturing process and component 26 and/or support structures 30A and 30B being formed. Depositor 14 can deposit/provide material anywhere upon build plate 12, include upon primary insert 20 and support inserts 22A and 22B. Energy source 16 can produce a heat flux (e.g., from a laser or other energy source) directed at build plate 12, primary insert 20, and/or support inserts 22A and 22B to liquify (i.e., change the state of) the deposited material to form a layer of component 26 and/or support structures 30A and 30B. Energy source 16 is generally known in the art and can be any type of energy source able to direct energy at the deposited material to heat the deposited material.

Build plate 12 provides a structural surface upon which component 26 and support structures 30A and 30B were built in prior art systems. However, build plate 12 in additive manufacturing system 10 includes one or multiple indentations 18 extending into top surface 19 to accommodate primary insert 20 and support inserts 22A and 22B. Build plate 12 can have any shape, including a rectangular shape (i.e., footprint) as shown in FIG. 1A. In prior art systems, build plate 12 would be removed from additive manufacturing system 10 once component 26 has been formed. However, because build plate 12 is configured to accommodate primary insert 20 and support inserts 22A and 22B, only inserts 20, 22A, and 22B need to be removed from additive manufacturing system 10 when component 26 and support structures 30A and 30B have been completed, saving time and expense. As shown in FIG. 1B, build plate 12 has top surface 19 that can be planar with primary build surface 24 and support build surfaces 28A and 28B to provide a flat surface upon which component 26 and support structures 30A and 30B can be built. Additionally, for example, top surface 19 can be configured such that top surface 19 is vertically offset from primary build surface 24 and/or support build surfaces 28A and 28B to aid in removal of primary insert 20 and support inserts 22A and 22B. Build plate 12 without indentation 18 is generally known in the art and can be any type of build plate/platform (as long as the build plate is able to include indentations to accommodate inserts).

Indentation 18 in build plate 12 can be a groove, dimple, channel, or any other type of cavity extending into build plate 12 from top surface 19. Build plate 12 can include one or multiple indentations 18, which can be configured such that one indentation 18 can accommodate one or multiple inserts 20, 22A, and 22B. For example, indentation 18 in the disclosed embodiment is only one indentation that accommodates primary insert 20 and adjacent support inserts 22A and 22B (i.e., support inserts 22A and 22B are in contact with primary insert 20). However, other configurations can include multiple indentations 18. For example, one indentation 18 that accommodates primary insert 20, one indentation 18 that accommodates support insert 22A, and one indentation 18 that accommodates support insert 22B. Each indentation 18 can have any shape, including simple shapes such as a circle or rectangular or complex shapes, that corresponds to one or multiple inserts. Each indentation 18 can extend into build plate 12 any depth. While the depth of indentation 18 is shown as being over half a thickness of build plate 12, indentation 18 can have a depth that is greater than or less than that shown in FIG. 1B. Further, the depth of indentation 18 can be constant, or a bottom of indentation 18 can have a varying depth and can include various features, such as projections or grooves, to ensure the insert corresponding to each indentation 18 is correctly in place and is not incorrectly oriented or in an incorrect indentation 18. Additionally, for the same reason, indentations 18 can have a different depth than other indentations 18.

Primary insert 20 is configured to be placed in indentation 18 and provide primary build surface 24 upon which component 26 is formed by additive manufacturing system 10. Primary insert 20 can have any shape, including simple and complex shapes, suitable for component 26 to be formed upon. For example, if component 26 is to have a star-shaped footprint, primary insert 20 (and corresponding indentation 18) can also have a star shape. Primary insert 20 can have a flat, smooth primary build surface 24 or primary build surface 24 can have bulges, dimples, or other features. Further, primary insert 20 can be constructed from the same or a different material as build plate 12 and/or support inserts 22A and 22B, although primary insert 20 should be constructed from a material that is suitable for component 26 to be formed upon (and then separated from). Further, primary insert 20 is constructed from a material that expands and contracts in response to a change in temperature such that cooling source 38 can be used to reduce the temperature of primary insert 20 to cause primary insert 20 to contract to aid in removal of primary insert 20 (and possibly component 26) from build plate 12. Primary insert 20 and build plate 12 can be constructed from different materials with different coefficients of thermal expansion/contraction such that when primary insert 20 and build plate 12 are cooled, they contract different amounts. As shown in the disclosed embodiment, primary insert 20 has a greater surface area than support inserts 22A and 22B. However, depending on component 26 with overhangs 32, primary insert 20 and support inserts 22A and 22B can have any surface area and shape. Primary insert 20 can also include one or multiple coating on primary build surface 24.

Support inserts 22A and 22B are configured to be placed in indentation 18 (either the same indentation as primary insert 20 or different indentations 18) and provide support build surface 28A and 28B upon which support structures 30A and 30B are formed by additive manufacturing system 10. While the disclosed embodiment shows two support inserts 22A and 22B, other configurations can include none, one, or more than two support inserts 22A and 22B for various amounts and configurations of support structures 30A and 30B. Support inserts 22A and 22B can have any shape, including simple and complex shapes, suitable for support structures 30A and 30B. For example, if one support structure 30A has a snake-like shape, support insert 22A (and corresponding indentation 18) can also have a snake-like shape. Support inserts 22A and 22B can each have a flat, smooth support build surface 28A and/or 28B or support build surfaces 28A and/or 28B can have bulges, indentations, or other features. Further, support inserts 22A and 22B can be constructed from the same or a different material as each other, as build plate 12, and/or as primary insert 20. However, support inserts 22A and 22B should be constructed from a material that is suitable for support structures 30A and 30B to be formed upon (and then separated from). Further, support inserts 22A and 22B can be constructed from a material that expands and contracts in response to a change in temperature such that cooling source 38 can be used to reduce the temperature of support inserts 22A and 22B to cause support inserts 22A and 22B to contract to aid in removal of support inserts 22A and 22B (and possibly support structures 30A and 30B) from build plate 12. Support inserts 22A and 22B, primary insert 20, and build plate 12 can be constructed from different materials with different coefficients of thermal expansion/contraction such that when inserts 20, 22A, and 22B and build plate 12 are cooled, they contract different amounts. As shown in the disclosed embodiment, support inserts 22A and 22B each have a smaller surface area than primary insert 20. However, depending on component 26 with overhangs 32, primary insert 20 and support inserts 22A and 22B can have any surface area and shape. Support inserts 22A and 22B can also include one or multiple coatings on support build surface 28A and 28B.

Inserts 20, 22A, and 22B can be sized and shaped to provide a tight fit within one or multiple indentations 18 such that inserts 20, 22A, and 22B do not shift/move during the additive manufacturing process. Inserts 20, 22A, and 22B can be adjacent to one another and/or other inserts depending on the shape and orientation of component 26 with overhangs 32 (and thus the need for support structures 30A and 30B). When component 26 and support structures 30A and 30B are being formed, the first layer of component 26 is formed upon and bonded to primary insert 20, and the first layer of support structures 30A and 30B are formed upon and bonded to support inserts 22A and 22B, respectively. Thus, inserts 20, 22A, and 22B should allow for the separation of inserts 20, 22A, and 22B from component 26 and support structures 30A and 30B, respectively. Inserts 20, 22A, and 22B can be configured to withstand electrical discharge machining, mechanical cutting, or other means of separating the two pieces. Further, inserts 20, 22A, and 22B can be configured to allow for grinding down to provide a flat, smooth primary build surface 24 and support build surfaces 28A and 28B for reuse in additive manufacturing system 10.

Component 26 can have any shape and orientation suitable to be formed layer by layer using additive manufacturing. While shown as having a simple T shape in the disclosed embodiment, component 26 can have any simple or complex shape with any number of overhangs 32. As is known in the art, overhangs 32 of component 26 are structural components that extend outward past the previously formed layer of component 26. Overhangs 32 must be supported during the additive manufacturing process to prevent overhangs 32 from collapsing. The differing shapes, orientation, and configurations of component 26 with overhangs 32 are generally known in the art. Primary insert 20 is shaped to provide a surface upon which component 26 is formed similarly to if component 26 was formed directly onto build plate 12. Component 26 can be configured to be separated from primary insert 20 by various means, including electrical discharge machining.

Support structures 30A and 30B provide support to overhangs 32 and are located between support inserts 22A and 22B, respectively, and overhangs 32. Support structures 30A and 30B can each support one or multiple overhangs 32 and are positioned as needed (along with support inserts 22A and 22B). While the disclosed embodiment shows two support structures 30A and 30B, other configurations can include none, one, or more that two support structures 30A and 30B. Support structures 30A and 30B can have any shape and/or configuration, including a lattice structure or one or multiple pillars to support overhangs 32. Support structures 30A and 30B can be a noncontact type support structure at support surfaces 34. A noncontact support structure is a configuration in which, during the formation of support structures 30A and 30B and overhangs 32, one or a number of layers are not formed at support surfaces 34 (i.e., no material is placed and melted) between support structures 30A and 30B and overhangs 32. With such a configuration, overhangs 32 do sag/slump downward to contact support surfaces 34 of support structures 30A and 30B. However, the "bonding" between overhangs 32 and support structures 30A and 30B is minimal, allowing for the two to be separated easily and, often times, by hand. Thus, after component 26 has been formed, component 26 (i.e., overhangs 32) can easily be separated from support structures 30A and 30B. Support structures 30A and 30B can support overhangs 32 through other means, such as full contact supports that are separated from overhangs 32 through chemical or mechanical means.

To aid in the placement and removal of primary insert 20 and support inserts 22A and 22B into and from indentation 18, additive manufacturing system 10 includes another energy source 36 and cooling source 38. Energy source 36 can be the same or a different source of heat than energy source 16. Energy source 36 is configured to provide energy to heat to build plate 12 to cause build plate 12 to expand due to thermal expansion. With build plate 12 experiencing thermal expansion, indentation 18 is larger, which in turn aids in the placement of primary insert 20 and support inserts 22A and 22B within the expanded indentation 18. Build plate 12 is then allowed to return to a reduced temperature and an original size, thus resulting in primary insert 20 and support inserts 22A and 22B being press fit within indentation 18 to prevent movement of primary insert 20 and support inserts 22A and 22B relative to build plate 12 and relative to each other. Cooling source 38 is configured to reduce the temperature of primary insert 20 and/or support inserts 22A and 22B to cause primary insert 20 and/or support inserts 22A and 22B to contract relative to build plate 12 due to thermal contraction. With inserts 20, 22A, and 22B experiencing thermal contraction, inserts 20, 22A, and 22B are no longer tightly held within indentation 18, thus allowing for inserts 20, 22A, and 22B (and possibly component 26 and support structures 30A and 30B) to be easily removed from indentations 18 and build plate 12.

As disclosed above, additive manufacturing system 10 includes one or multiple indentations 18 in build plate 12 configured to accommodate primary insert 20 and support inserts 22A and 22B (shown in FIG. 1B). Primary insert 20 provides primary build surface 24 upon which component 26 is formed, and support inserts 22A and 22B provide support build surfaces 28A and 28B upon which support structures 30A and 30B are formed to provide support to overhangs 32 of component 26 (shown in FIG. 1C). Upon formation of component 26 (and support structures 30A and 30B), primary insert 20 and component 26 (with overhangs 32) can easily be separated from support inserts 22A and 22B and support structures 30A and 30B because support structures 30A and 30B are formed on different inserts than component 26 (shown in FIG. 1D). Then, new/reused inserts 20, 22A, and 22B can be placed in indentation 18 and the additive manufacturing process is repeated to form another component 26. The use of multiple inserts 20, 22A, and 22B reduces the time needed to separate component 26 from support structures 30A and 30B and the time needed to separate component 26 and support structures 30A and 30B from build plate 12 (because new/reused inserts 20, 22A, and 22B can be placed in indentations 18 and the process repeated). Thus, the time needed by additive manufacturing system 10 to form component 26 is decreased and the additive manufacturing process is more efficient.

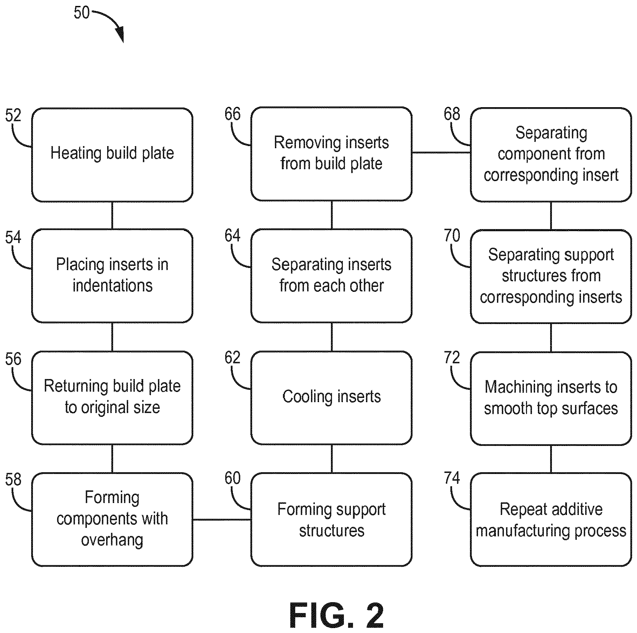

FIG. 2 is a flow chart of the additive manufacturing process utilizing inserts. Process 50 can include additional steps not expressly disclosed, and some steps discussed below can be omitted from process 50 while still providing the benefits of using inserts to provide a surface upon which a component and support structures can be built. While the below description describes the steps and parts with reference to additive manufacturing system 10 shown in FIGS. 1A-1D, process 50 can be performed using systems and parts other than those set out in FIGS. 1A-1D.

Process 50 first includes heating build plate 52, which causes build plate 12 to undergo thermal expansion to increase/expand the size of indentation 18. Step 52 can be performed by any means, including by energy source 16, energy source 36, or another means. Step 52 may make the performance of step 54 easier as indentation 18 is enlarged to allow inserts 20, 22A, and 22B more space to fit within indentation 18. Process 50 does not need to include step 52, and step 54 below can be performed without build plate 12 experiencing thermal expansion to increase the size of indentation 18.

Step 54 is placing primary insert 20 and support inserts 22A and 22B into indentation (or multiple indentations) 18. Inserts 20, 22A, and 22B and indentation 18 can be sized to correspond to each other such that, even if step 52 is not performed, inserts 20, 22A, and 22B are able to be placed into indentation 18 and held within indentation 18.

Step 56 is then performed, which is returning build plate 12 to an original size. Step 56 does not need to be performed if step 52 (heating build plate 12 to cause thermal expansion to increase the size of build plate 12) is not performed because build plate 12 would already be at an original size. Returning build plate 12 to its original size (step 56) causes indentation 18 to contract, thereby reducing the size of indentation 18 to tightly hold inserts 20, 22A, and/or 22B and prevent inserts 20, 22A, and 22B from movement (relative to build plate 12) during additive manufacturing process 50.

Step 58, which is forming component 26 having one or more overhangs 32, can be performed concurrently with step 60, which is forming support structures 30A and 30B. In step 58, component 26 is formed (e.g., built layer by layer) upon primary build surface 24 of primary insert 20 with overhangs 32 formed extending outward to be above support inserts 22A and 22B. In step 60, support structures 30A and 30B are formed (e.g., built layer by layer) upon support build surfaces 28A and 28B of support inserts 22A and 22B, respectively. Support structures 30A and 30B are positioned between support inserts 22A and 22B and overhangs 32 to provide structural support to overhangs 32 to prevent overhangs 32 from collapsing until component 26 has hardened. While described as only having two support structures 30A and 30B, step 60 can include building/forming one or more than two support structures, depending on the number of overhangs 32, the shape and orientation of component 26, and the structural support needs. If component 26 has no overhangs 32 in need of support, then step 58 is omitted from process 50.

Step 62 is reducing the temperature (i.e., cooling) of primary insert 20 and support inserts 22A and 22B, which causes inserts 20, 22A, and 22B to undergo thermal contraction to decrease/contract the size of inserts 20, 22A, and 22B. Step 62 can be performed by any means, including by cooling source 38. Step 62 may make the performance of step 64 and step 66 easier as inserts 20, 22A, and 22B are smaller/contracted, allowing for more space to remove inserts 20, 22A, and 22B from indentation 18 and separate from one another. During step 62, component 26 and support structures 30A and 30B may also experience cooling and undergo thermal contraction accordingly. Process 50 may not need step 62 if inserts 20, 22A, and 22B are sized to allow for removal from indentation 18 without great effort.

Step 64 includes separating primary insert 20 and support inserts 22A and 22B from each other, while step 66 includes removing primary insert 20 and support inserts 22A and 22B from indentation 18 in build plate 12. Step 64 and can be performed concurrently, step 64 can be performed before step 66, or step 66 can be performed before step 64. Step 66 can be performed by removing inserts 20, 22A, and 22B from indentation 18 by hand or through the use of tools. If step 62 was first performed (cooling inserts 20, 22A, and 22B to contract/shrink them), then step 66 may be easier than if inserts 20, 22A, and 22B were not cooled to undergo thermal contraction. Step 64 includes separating primary insert 20 from support inserts 22A and 22B which necessarily includes separating component 26 (with overhangs 32) from support structures 30A and 30B. One embodiment includes inserts 20, 22A, and 22B being contained within indentation 18 adjacent one another without any adhesive/bonding there between, thus allowing for inserts 20, 22A, and 22B to be pulled apart from one another. However, as noted above, support structures 30A and 30B may be in contact with and bonded to overhangs 32 of component 26 (either a contact support or noncontact support). Thus, some means of separating support structures 30A and 30B from component 26 may be needed, such as pulling/breaking the parts apart by hand, using electrical discharge machining, or cutting the parts apart. Steps 64 and 66 can be performed very soon after steps 58 and 60 (forming component 26 and support structures 30A and 30B), or some amount of time can be allowed to elapse before step 64 and 66 are performed to allow for sufficient cooling/hardening of component 26 and support structures 30A and 30B.

Step 68 includes separating component 26 from primary insert 20. During additive manufacturing process 50, component 26 is formed upon primary build surface 24 of primary insert 20 (step 58). During step 58, the first layer that is built is formed upon primary insert 20 and may bond to primary insert 20. Thus, component 26 may need to be separated from primary insert 20. Step 68 can be accomplished through a variety of means, including electrical discharge machining, utilizing mechanical cutting tools such as a saw, and/or by using chemical means. Component 26 should be separated from primary insert 20 in such a way so as to not damage component 26 because after step 68 is performed, component 26 may be in its finished state and ready for use (i.e., no post-processing may be needed).

Step 70 includes separating support structures 30A and 30B from corresponding support inserts 22A and 22B. Step 70 can be performed similarly to step 68, as support structures 30A and 30B can be bonded to support inserts 22A and 22B during step 60. Support structures 30A and 30B can be bonded to support inserts 22A and 22B through a full contact support bond or through a noncontact type bond. If the latter, step 70 may be performed by pulling/breaking support structures 30A and 30B apart from support inserts 22A and 22B. If the former, support structures 30A and 30B can be separated from support inserts 22A and 22B through a variety of means, including electrical discharge machining, utilizing mechanical cutting tools such as a saw, and/or by using chemical means. Support structures 30A and 30B as well as component 26 could have design features that permit removal from inserts 20, 22A, and 22B via thermally cooling or heating. Additionally, if additive manufacturing system 10 allows, step 70 does not need to be performed and support structures 30A and 30B can remain on top of support inserts 22A and 22B to be reused for subsequent formations of component 26 with overhangs 32 (i.e., for repeating additive manufacturing process 50 to form another component 26).

Step 72 includes machining or otherwise smoothing/flattening primary build surface 24 and/or support build surfaces 28A and 28B to prepare inserts 20, 22A, and 22B for reuse in repeating additive manufacturing process 50. Step 72 includes removing any material of component 26 and support structures 30A and 30B left over after steps 68 and 70 and does not necessarily include removing any material that forms inserts 20, 22A, and 22B. Step 72 can be performed using a variety of means, including a grinder to grind down inserts 20, 22A, and 22B to remove any material that remains from component 26 (which has previously been separated from primary insert 20) and support structures 30A and 30B (which have previously been separated from support inserts 22A and 22B). If support structures 30A and 30B are intended to remain attached to support inserts 22A and 22B, then step 72 may only need to be performed on primary insert 20. Additionally, step 72 may not need to be performed if inserts 20, 22A, and/or 22B are sufficiently smooth/flat so as to be suitable for reuse in additive manufacturing process 50. Also, step 72 does not need to be performed if inserts 20, 22A, and 22B are not being reused.

Finally, if needed, step 74 can be performed, which is repeating additive manufacturing process 50 to form another component 26 (and, if needed, support structures 30A and 30B). Usually, additive manufacturing process 50 will be repeated multiple times to form multiple identical components 26. Thus, inserts 20, 22A, and 22B (which may be tailored to the shape of component 26) may be reused during additive manufacturing process 50 for the formation of subsequent components 26.

Additive manufacturing system 10 and additive manufacturing process 50 are disclosed herein that include build plate 12 with one or multiple indentations 18 to accommodate multiple inserts 20, 22A, and 22B upon which component 26 and one or multiple support structures 30A and 30B can be formed. Inserts 20, 22A, and 22B are shaped such that component 26 is built/formed upon primary insert 20 and support structures 30A and 30B are built/formed upon support inserts 22A and 22B. When additive manufacturing process 50 is complete, inserts 20, 22A, and 22B are removed from indentation 18 in build plate 12. Inserts 20, 22A, and 22B are then separated from each other, thus separating support structures 30A and 30B from finished component 26. Support structures 30A and 30B can be noncontact support structures such that support structures 30A and 30B can be separated from component 26 without the need for cutting or further machining. Different (e.g., new/reused) inserts are then utilized in build plate 12, which can be new inserts or previously used inserts that have been separated from component 26 and/or support structures 30A and 30B. With support structures 30A and 30B able to be the noncontact type with overhangs 32 of component 26, support structures 30A and 30B can be broken off from component 26 by hand during post-processing, decreasing the time and machining needed to prepare finished component 26.

While the invention has been described with reference to an exemplary embodiment(s), it will be understood by those skilled in the art that various changes may be made and equivalents may be substituted for elements thereof without departing from the scope of the claims. In addition, many modifications may be made to adapt a particular situation or material to the teachings of the claims without departing from the scope thereof. Therefore, it is intended that the invention not be limited to the particular embodiment(s) disclosed, but that the invention will include all embodiments falling within the scope of the appended claims.

## Claims

1. An additive manufacturing system (10) comprising:
a build plate (12) having at least one indentation (18);
a primary insert (20) within the at least one indentation and configured to provide a surface upon which a component (26) can be formed;
a first support insert (22A) within the at least one indentation and configured to provide a surface upon which a first support structure (30A) can be formed,;
a material depositor (14) configured to provide material to form the component and the first support structure; and
a first energy source (16) configured to change a state of the material to form the component and the first support structure; and the system **characterized by** further comprising:
a second energy source (36) configured to heat the build plate to cause the build plate to expand to allow the primary insert and the first support insert to be placed within the at least one indentation; and
a cooling source (38) configured to cool the primary insert and the first support insert to cause the primary insert and the first support insert to contract to allow for the primary insert and the first support insert to be removed from the at least one indentation.

2. The additive manufacturing system of claim 1, wherein the primary insert is adjacent to the first support insert.

3. The additive manufacturing system of claim 2, further comprising:
a second support insert (32B) within the at least one indentation and configured to provide a surface upon which a second support structure (30B) can be formed.

4. The additive manufacturing system of claim 1, 2 or 3, wherein a top (19) of the build plate is planar with a top of the primary insert and a top of the first support insert.

## Patentansprüche

1. Generatives Fertigungssystem (10), umfassend:
eine Bauplatte (12), die mindestens eine Vertiefung (18) aufweist;
einen Primäreinsatz (20), der innerhalb der mindestens einen Vertiefung und dazu konfiguriert ist, eine Oberfläche bereitzustellen, auf der eine Komponente (26) gebildet werden kann;
einen ersten Stützeinsatz (22A), der innerhalb der mindestens einen Vertiefung und dazu konfiguriert ist, eine Oberfläche bereitzustellen, auf der eine erste Stützstruktur (30A) gebildet werden kann;
einen Materialeinleger (14), der dazu konfiguriert ist, Material bereitzustellen, um die Komponente und die erste Stützstruktur zu bilden; und
eine erste Energiequelle (16), die dazu konfiguriert ist, einen Zustand des Materials zu ändern, um die Komponente und die erste Stützstruktur zu bilden; und wobei das System **dadurch gekennzeichnet ist, dass** es ferner Folgendes umfasst:
eine zweite Energiequelle (36), die dazu konfiguriert ist, die Bauplatte zu erwärmen, um zu bewirken, dass sich die Bauplatte ausdehnt, damit der Primäreinsatz und der erste Stützeinsatz in der mindestens einen Vertiefung platziert werden können; und
eine Kühlquelle (38), die dazu konfiguriert ist, den Primäreinsatz und den ersten Stützeinsatz abzukühlen, um zu bewirken, dass sich der Primäreinsatz und der erste Stützeinsatz zusammenziehen, damit der Primäreinsatz und der erste Stützeinsatz aus der mindestens einen Vertiefung entfernt werden können.

2. Generatives Fertigungssystem nach Anspruch 1, wobei der primäre Einsatz benachbart zu dem ersten Stützeinsatz ist.

3. Generatives Fertigungssystem nach Anspruch 2, ferner umfassend:
einen zweiten Stützeinsatz (32B), der innerhalb der mindestens einen Vertiefung und dazu konfiguriert ist, eine Oberfläche bereitzustellen, auf der eine zweite Stützstruktur (30B) gebildet werden kann.

4. Generatives Fertigungssystem nach Anspruch 1, 2 oder 3, wobei eine Oberseite (19) der Bauplatte mit einer Oberseite des Primäreinsatzes und einer Oberseite des ersten Stützeinsatzes planar ist.

## Revendications

1. Système de fabrication additive (10) comprenant :
une plaque de construction (12) ayant au moins une indentation (18) ;
un insert principal (20) à l'intérieur de l'au moins une indentation et configuré pour fournir une surface sur laquelle un composant (26) peut être formé ;
un premier insert de support (22A) à l'intérieur de l'au moins une indentation et configuré pour fournir une surface sur laquelle une première structure de support (30A) peut être formée ;
un dispositif de dépôt de matériau (14) configuré pour fournir du matériau pour former le composant et la première structure de support ; et
une première source d'énergie (16) configurée pour changer un état du matériau afin de former le composant et la première structure de support ; et le système étant **caractérisé en ce qu'**il comprend en outre :
une seconde source d'énergie (36) configurée pour chauffer la plaque de construction afin de provoquer la dilatation de la plaque de construction pour permettre à l'insert principal et au premier insert de support d'être placés à l'intérieur de l'au moins une indentation ; et
une source de refroidissement (38) configurée pour refroidir l'insert principal et le premier insert de support afin de provoquer la contraction de l'insert principal et du premier insert de support pour permettre à l'insert principal et au premier insert de support d'être retirés de l'au moins une indentation.

2. Système de fabrication additive selon la revendication 1, dans lequel l'insert principal est adjacent au premier insert de support.

3. Système de fabrication additive selon la revendication 2, comprenant en outre :
un second insert de support (32B) à l'intérieur de l'au moins une indentation et configuré pour fournir une surface sur laquelle une seconde structure de support (30B) peut être formée.

4. Système de fabrication additive selon la revendication 1, 2 ou 3, dans lequel un dessus (19) de la plaque de construction est plan avec un dessus de l'insert principal et un dessus du premier insert de support.
